# DEMANDE DE BREVET EUROPEEN

(11) **EP 0 756 810 A1**
(43) Date de publication de la demande: **05.02.1997**
(21) Numéro de dépôt: 96401642.2
(22) Date de dépôt: 23.07.1996
(51) Int. Cl.: A01B 3/46, B60K 17/14, B60K 23/08

(54) **Perfectionnement aux engins attelés à un tracteur et dotés d'une assistance à la propulsion par moteur hydraulique**

(30) Priorité: 28.07.1995 FR 9509396
(71) Demandeur: CHARRUES NAUD, 49600 Andreze (FR)
(72) Inventeur: Naud, Georges, 49300 Cholet (FR); Naud, Bernard, 49600 Andreze (FR); Lebouc, Jean-Louis, 49280 La Seguiniere (FR)
(74) Mandataire: Phélip, Bruno

(57) **Abrégé**

Le perfectionnement consiste à disposer, directement sur le moteur-roue hydraulique, un dispositif qui permet d'établir un circuit de barbotage très court entre la sortie et l'entrée dudit moteur hydraulique, lequel circuit est actif lorsque le moteur est en situation inactive d'assistance à la propulsion, fonctionnant comme une pompe.

Ce dispositif convient notamment pour la mise en barbotage d'un moteur hydraulique d'assistance de propulsion, monté sur les roues d'un chariot d'une charrue semi-portée attelée à un tracteur.

## Description

La présente invention concerne un perfectionnement apporté aux moteurs-roues hydrauliques que l'on rencontre sur des engins où ils sont utilisés de façon temporaire comme aide ou assistance à la propulsion.

Ce perfectionnement concerne tout d'abord un procédé de mise en barbotage d'un moteur-roue hydraulique. Il concerne également le moteur-roue hydraulique muni des moyens qui permettent la mise en oeuvre du procédé. Il concerne aussi l'engin attelé à un véhicule tracteur, et en particulier un engin muni d'au moins un moteur-roue hydraulique, équipé du dispositif permettant la mise en oeuvre du procédé.

Ce perfectionnement peut notamment trouver son application sur les engins de travail du sol et en particulier les charrues qui comportent une motorisation auxiliaire du type de celle décrite dans le document FR - A - 2677 843.

La motorisation auxiliaire permet d'améliorer nettement les conditions de travail lorsque les charrues comportent un grand nombre de corps. Cette motorisation, constituée de moteurs-roues hydrauliques installés au niveau du chariot porteur, n'est en fait utilisée que pendant l'opération de labour, lorsque les conditions de travail sont difficiles.

Les opérations de labour s'effectuent à une vitesse qui varie entre 5 et 10 km/h. Lors du transport sur route, la vitesse est beaucoup plus élevée ; elle peut en effet atteindre, voire dépasser 40 km/h. L'aide à la propulsion n'est utilisée qu'en cas de besoin lors des opérations de labour dans les terrains difficiles, ou lorsque les conditions de travail l'exigent comme par exemple dans un terrain détrempé.

Dans les conditions normales de transport, les moteurs-roues ne sont pas alimentés et ils se comportent comme des pompes en faisant circuler l'huile dans les tuyauteries d'alimentation et de retour qui forment un circuit fermé pour permettre le barbotage et la lubrification constante du moteur. Pour éviter une élévation de température trop importante et une détérioration des tuyauteries, et en particulier des flexibles, il est nécessaire de prévoir des tuyauteries et flexibles de grand diamètre. De plus, il faut prévoir une vanne qui permet de mettre en oeuvre le circuit de barbotage.

La présente invention propose un procédé et des moyens pour la mise en oeuvre de ce procédé, qui permettent de s'affranchir des problèmes posés par ces moteurs-roues hydrauliques qui, pour des raisons de simplicité, d'utilisation et de coût, ne comportent pas de façon intrinsèque, un système d'embrayage ou de crabotage.

Le procédé selon l'invention consiste, lorsque le moteur hydraulique est en situation inactive d'assistance à la propulsion, c'est-à-dire non alimenté en pression par une pompe, à établir entre la sortie et l'entrée dudit moteur, une sorte de court-circuit ou plutôt de circuit très court, qui permet au fluide hydraulique de circuler sans perte de charge entre ladite sortie et ladite entrée, lequel fluide hydraulique est mis en mouvement par le moteur qui fonctionne comme une pompe, entraîné par la roue de l'engin, et ce fluide assure la lubrification dudit moteur.

Le dispositif de mise en oeuvre du procédé est constitué d'un bloc foré, installé directement sur la sortie et sur l'entrée du moteur hydraulique. Ce bloc comporte, de façon intrinsèque, des moyens permettant d'établir un court-circuit entre la sortie et l'entrée dudit moteur, sans perte de charge et de ce fait sans échauffement, lequel circuit a une longueur qui est de l'ordre de quelques centimètres seulement.

Selon une première possibilité de l'invention, le court-circuit est du type non réversible, c'est-à-dire qu'il fonctionne uniquement dans le sens sortie vers entrée, constitué d'un simple clapet anti-retour taré pour s'ouvrir lorsque la pression dans le circuit est de l'ordre d'un bar ou moins de un bar.

Toujours selon l'invention, le circuit retour entre moteur et réservoir, comporte un organe du genre clapet qui est taré à une valeur de l'ordre de 3 à 5 fois celle du clapet anti-retour du bloc foré.

Selon une autre possibilité de l'invention, le court-circuit est réversible, constitué d'une vanne électrique ou manuelle réglable, qui permet notamment de contrôler le débit entre l'entrée et la sortie du moteur et vice-versa, pour utiliser ledit moteur comme un organe de freinage de l'engin ou pour contrôler directement l'alimentation du moteur ; le circuit retour du fluide comportant également une vanne du type tout ou rien pour fermer le circuit retour et isoler le moteur.

Toujours selon l'invention, le bloc foré comporte un orifice de connexion du circuit drainage du moteur, qui met directement en communication ce circuit drainage avec la sortie du moteur hydraulique.

L'invention concerne également un engin attelé à un tracteur agricole, comportant au moins un moteur-roue hydraulique chargé d'apporter une assistance temporaire à la propulsion, et qui est équipé du dispositif permettant le barbotage dudit moteur.

L'invention sera encore détaillée à l'aide de la description suivante des dessins annexés, donnés à titre indicatif, et dans lesquels :
- la figure 1 est une vue schématique, de dessus, d'un tracteur tirant une charrue semi-portée dont les roues du chariot sont équipées de moteurs hydrauliques d'assistance ;
- la figure 2 illustre l'installation hydraulique utilisée pour l'alimentation et des moteurs-roues ;
- la figure 3 représente, d'une façon plus détaillée, un moteur hydraulique monté sur un bras du chariot porteur de la charrue ;
- la figure 4 représente, en coupe, le bloc foré installé sur le moteur hydraulique ;
- la figure 5 représente le bloc foré vu de dessus.

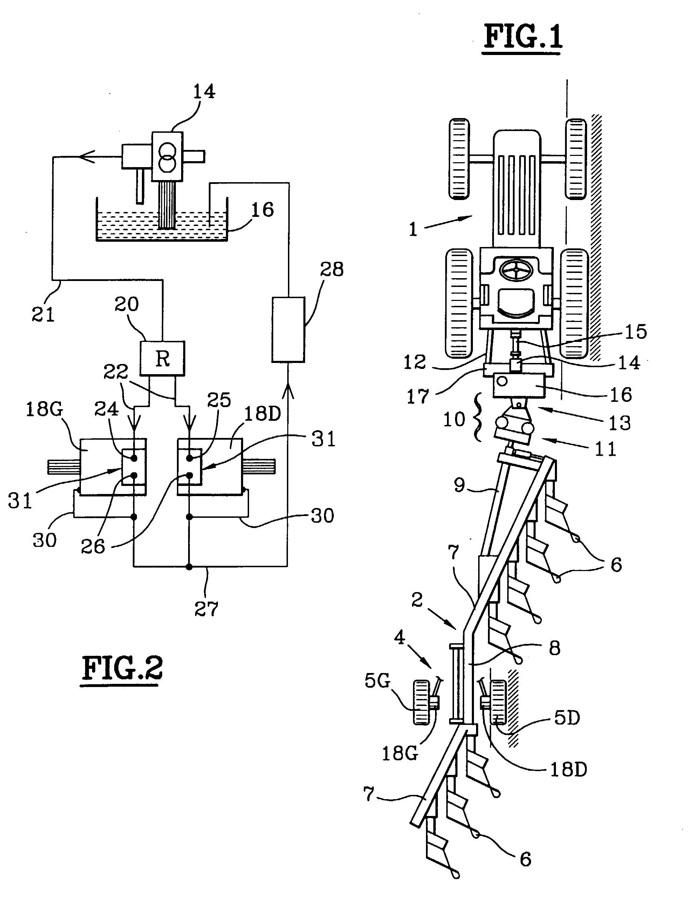

L'ensemble de labour, représenté figure 1 comprend un tracteur 1 auquel est attelé une charrue 2, du type semi-portée.

Cette charrue semi-portée comporte un chariot 4 muni d'une roue droite 5 D et d'une roue gauche 5 G. Des corps de labour 6 sont disposés à l'avant et à l'arrière du chariot 4. Ils sont solidaires d'un bâti 7 constitué de deux tronçons disposés de part et d'autre du chariot et sont réunis par un tronçon intermédaire 8 qui est articulé sur ledit chariot 4.

Le bâti 7 est relié au tracteur au moyen d'une flèche 9 par l'intermédiaire d'une tête d'attelage 10.

L'avant-train 11 qui comprend le système de retournement, est relié au système de relevage 12 du tracteur par l'intermédiaire d'un joint 13 du type cardan.

L'avant-train comprend les accessoires hydrauliques et en particulier une pompe 14 reliée à la prise de force du tracteur par un arbre 15. Cette pompe 14 est alimentée à partir d'un réservoir 16. L'ensemble pompe-réservoir est porté par une console 17 qui constitue l'avant-train.

La motorisation du chariot 4 et en particulier des roues 5 s'effectue au moyen de moteurs hydrauliques 18. Ces moteurs hydrauliques sont du type moteur-roue c'est-à-dire qu'ils constituent également le moyeu de chacune des roues 5.

La figure 2 représente l'installation hydraulique. On retrouve la pompe hydraulique 14, alimentée à partir du réservoir 16. Cette pompe hydraulique, du type à pression constante et débit variable, alimente les moteurs 18 par l'intermédiaire d'une vanne de répartition 20 qui est chargée d'alimenter chacun des moteurs 18 G et 18 D, en fonction des besoins de chaque roue.

On trouve une tuyauterie 21 entre la pompe 14 et la vanne 20, ainsi que des tuyauteries 22 entre la vanne 20 et les moteurs 18 G et 18 D.

Les tuyauteries 22 sont connectées à l'orifice d'entrée 24 du moteur 18 G et du moteur 18 D.

Les sorties 26 de chacun des moteurs 18, sont connectées à une même tuyauterie de retour 27 qui comporte, entre les moteurs et le réservoir 16,un organe 28 qui permet de fermer ou d'ouvrir ou encore selon le cas de maintenir une certaine pression dans le circuit retour des moteurs 18.

Toujours figure 2, on remarque les circuits de drainage 30 de chacun des moteurs 18, connectés directement sur la tuyauterie de retour 27.

Lorsque l'assistance est active, la pompe 14 est entraînée par la prise de force 15 du tracteur et alimente chacun des moteurs 18 G et 18 D en fonction des besoins, au moyen de la vanne de répartition 20.

Lorsque l'assistance à la propulsion n'est pas nécessaire et lors du transport sur route, la prise de force 15 est débrayée. Dans ce cas, la vanne 20 est fermée et les moteurs 18 ne sont plus alimentés ; ils fonctionnent comme des pompes et barbotent dans l'huile résiduelle.

Dans le cas de l'invention, cette quantité d'huile est extrêmement limitée puisqu'elle correspond à la cylindrée du moteur hydraulique et au volume d'huile qui circule dans le circuit aménagé entre la sortie dudit moteur et son entrée. La partie du circuit de barbotage située en dehors du moteur est extrêmement courte, de l'ordre de quelques centimètres.

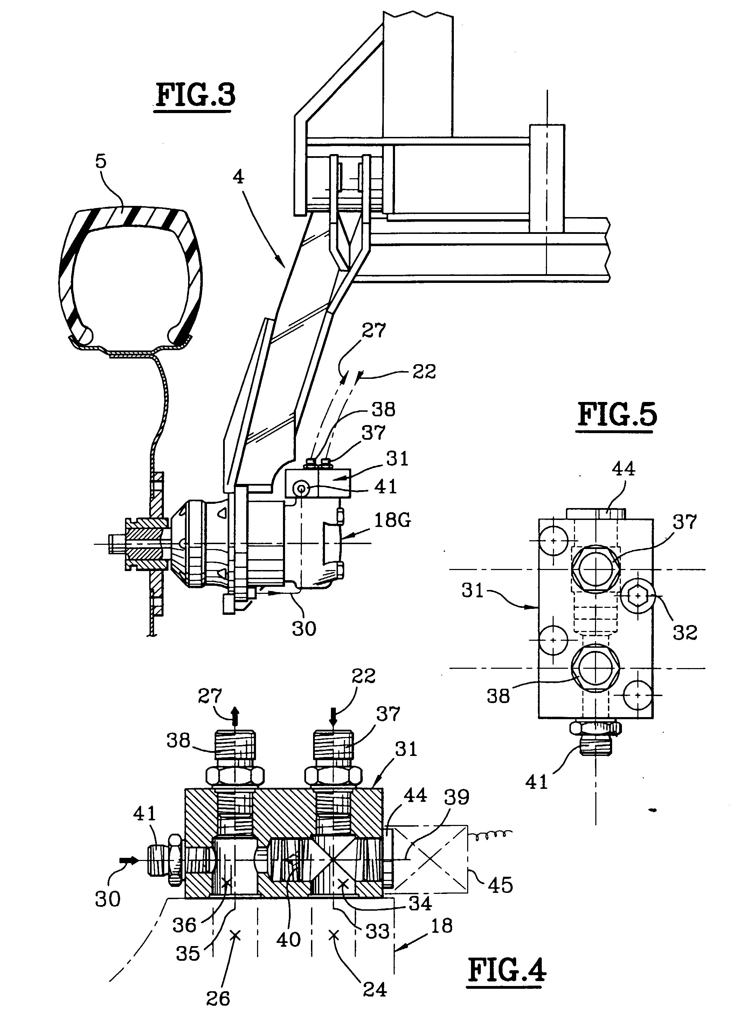

Chaque moteur hydraulique est en effet équipé d'un bloc foré 31 représenté figure 3, installé directement sur son entrée 24 et sa sortie 26.

Ce bloc foré 31, de forme parallélépipédique, coiffe les orifices d'entrée et de sortie du moteur hydraulique ; il est assemblé directement sur le moteur au moyen de vis 32, figure 5, lesquelles vis coopèrent avec des filetages aménagés dans le corps du moteur 18, normalement prévus pour les brides de fixation des tuyauteries.

Le bloc foré 31 est représenté en coupe figure 4. Il comporte, centré sur un axe 33 qui correspond à l'axe de l'entrée 24 du moteur 18, un orifice traversant 34 et, centré sur un axe 35 qui correspond à l'axe de la sortie 26 dudit moteur, un orifice traversant 36.

Ces orifices 34 et 36 sont parallèles entre eux et sont reliés respectivement à la tuyauterie d'alimentation 22 et à la tuyauterie de retour 27.

La tuyauterie d'alimentation 22 est connectée au bloc 31 au moyen du raccord 37 qui est installé sur l'orifice 34.

La tuyauterie de retour 27 est connectée au bloc 31 par un raccord 38 qui est disposé sur l'orifice 36.

Le bloc foré est également traversé de part en part selon un axe 39 qui est perpendiculaire et sécant aux axes 33 et 35 des orifices 34 et 36 respectivement. L'orifice centré sur cet axe 39 permet d'établir une communication directe entre les orifices 34 et 36 formant un circuit qui, avec le circuit interne du moteur 18, constitue le circuit de barbotage. Le circuit dans le bloc foré 31 est très court, de l'ordre de quelques centimètres ; il établit une sorte de court-circuit entre la sortie 26 et l'entrée 24 du moteur 18.

Selon un premier mode de réalisation, l'orifice centré sur l'axe 39 renferme un clapet anti-retour 40. Ce clapet 40 autorise le passage du fluide hydraulique dans le sens qui va de l'orifice 36 à l'orifice 34 et uniquement dans ce sens.

Ainsi, lorsque le moteur hydraulique est en situation inactive d'assistance, et que, entraîné en rotation par la roue 5 du chariot de la charrue, il se comporte comme une pompe, le fluide hydraulique provenant de la sortie 26, passe directement de l'orifice 36 du bloc 31 à l'orifice 34 grâce au clapet anti-retour 40 qui n'offre pratiquement pas de résistance puisque son tarage est de l'ordre de un bar. Ce clapet 40 établit un court-circuit entre la sortie 26 du moteur et son entrée 24.

En situation normale d'assistance, lorsque le moteur 18 est alimenté en fluide sous pression, le clapet 40 interdit toute communication entre l'orifice 34 et 36.

Toujours figure 4, on remarque un raccord 41, disposé à une extrêmité de l'orifice qui est centré sur l'axe 39, lequel raccord débouche dans l'orifice de sortie 36. Ce raccord 41 reçoit le circuit de drainage 30 du moteur, lequel circuit de drainage est représenté en traits mixtes fins, figure 3.

Ce circuit de drainage 30 collecte les fuites internes du moteur lorsqu'il fonctionne normalement comme moteur ou comme pompe. Il permet également, lorsque la charrue évolue à faible vitesse, en marche arrière, les moteurs étant entraînés par les roues 5, d'évacuer le fluide hydraulique de fuite qui circule en plus grande quantité du fait du sens de rotation inversé.

Un bouchon 44 obture l'orifice centré sur l'axe 39, du côté de l'orifice 34.

Le clapet anti-retour 40 peut être remplacé par une vanne tout ou rien 45 représenté en traits mixtes fins, du type à tiroir par exemple. Cette vanne tout ou rien peut s'intégrer dans le bloc foré 31, dans l'orifice centré sur l'axe 39, par l'orifice du bouchon 44. Cette vanne présente l'avantage d'offrir une réversibilité de communication contre l'orifice 34 et l'orifice 36 en établissant un court-circuit entre les orifices d'entrée 24 et de sortie 26 des moteurs hydrauliques.

Cette vanne 45 peut être manuelle ou électrique, utilisable pour réaliser un frein de parking ou pour contrôler la circulation du fluide entre les orifices 34 et 36. Ce contrôle direct en sortie du moteur permet notamment d'utiliser ce moteur comme organe de freinage de la charrue, couplé avec le système de freinage du tracteur par exemple.

Dans tous les cas, le circuit retour 27 entre les moteurs 18 et le réservoir 16 comporte un organe de fermeture dudit circuit, lorsque l'assistance est mise hors service.

Dans le cas de l'utilisation d'un clapet 40 qui permet un passage automatique de la fonction moteur à la fonction pompe du moteur 18, le circuit 27 est fermé par un organe 28 du type clapet à bille taré à quelques bars, de l'ordre de 3 à 5 fois le tarage du clapet 40. Cet organe 28 en forme de clapet permet de maintenir l'huile dans le circuit de barbotage sans l'intervention de l'opérateur ni d'un quelconque système de commande. Dans ce mode de réalisation, la mise en barbotage et la lubrification du moteur se font automatiquement, quelles que soient les conditions d'utilisation de l'engin lorsque l'assistance à la propulsion est inactive.

Dans les autres cas, le circuit 27 est fermé par un organe 28 du type vanne à commande manuelle ou électrique.

L'utilisation d'une vanne manuelle sur le circuit retour 27 se conçoit lorsque les blocs 31 comportent eux aussi des vannes manuelles. Une électro-vanne sera utilisée pour des blocs 31 équipés d'électro-vanne 45.

La mise en oeuvre de ces électro-vannes peut se faire de façon automatique en étant par exemple associée à la commande d'assistance ou de non-assistance à la propulsion. Elle peut aussi être mise en oeuvre par une commande distincte, utilisable à volonté par l'opérateur.

## Revendications

1. Procédé de mise en barbotage d'un moteur-roue hydraulique monté sur un engin pour constituer une aide temporaire à la propulsion, cette mise en barbotage étant effective lorsque ledit moteur-roue est en position inactive d'assistance à la propulsion, afin de permettre notamment audit engin de se déplacer à une vitesse nettement supérieure à la vitesse normale d'assistance, caractérisé en ce qu'il consiste à établir entre la sortie et l'entrée dudit moteur-roue (18), un circuit très court dont la longueur est de l'ordre de quelques centimètres, qui permet au fluide hydraulique de lubrifier ledit moteur-roue, ce dernier fonctionnant comme une pompe.

2. Dispositif pour la mise en oeuvre du procédé selon la revendication 1, caractérisé en ce qu'il est constitué d'un bloc foré (31), installé directement sur la sortie (26) et l'entrée (24) du moteur hydraulique (18), lequel bloc (31) comporte, de façon intrinsèque, des moyens permettant d'établir un court-circuit entre un orifice (36) aménagé dans ledit bloc, coopérant avec ladite sortie (26) et un orifice (34) également aménagé dans ledit bloc, coopérant avec ladite entrée (24).

3. Dispositif selon la revendication 2, caractérisé en ce qu'il comporte un court-circuit du type non réversible, comprenant un clapet anti-retour (40) interposé dans un orifice du bloc foré (31), entre les orifices (36) et (34) aménagés dans ledit bloc.

4. Dispositif selon la revendication 3, caractérisé en ce qu'il comporte, sur le circuit retour (27) du fluide hydraulique, entre le moteur hydraulique (18) et le réservoir (16), un organe (28) du genre clapet dont le tarage est supérieur, de l'ordre de 3 à 5 fois, à celui du clapet (40).

5. Dispositif selon la revendication 2, caractérisé en ce qu'il comporte un court-circuit du type réversible, comprenant une vanne (45) manuelle ou électrique, fonctionnant en tout ouvert ou fermé, interposée dans le bloc foré (31), entre les orifices (36) et (34).

6. Dispositif selon la revendication 2, caractérisé en ce qu'il comporte un court-circuit du type réversible comprenant une électro-vanne réglable qui permet de contrôler le débit dans le bloc foré (31) entre les orifices (36) et (34) et inversement.

7. Dispositif selon l'une quelconque des revendications 5 ou 6, caractérisé en ce qu'il comporte sur le circuit retour (27), un organe (28) du type vanne, électrique ou non, qui ferme ledit circuit retour lorsque l'assistance est hors service.

8. Dispositif selon l'une quelconque des revendications 3 à 7, caractérisé en ce que le bloc foré (31) comporte un raccord (41) connecté au circuit de drainage (30) pour le mettre en communication directe avec l'orifice (36) qui est branché sur la sortie (26) du moteur hydraulique (18).

9. Engin attelé à un tracteur, comportant au moins un moteur-roue hydraulique (18) chargé d'apporter une assistance temporaire à la propulsion, lequel moteur (18) est alimenté au moyen d'une pompe (14) entraînée par ledit tracteur à travers une vanne (20) de réglage de débit, laquelle vanne (20) est fermée pendant la phase de non assistance, caractérisé en ce qu'il comporte un dispositif selon l'une quelconque des revendications 2 à 8.

10. Engin attelé à un tracteur agricole, selon la revendication 9, caractérisé en ce qu'il comporte des moyens de commande des électro-vannes du circuit de barbotage, associés à la commande d'assistance ou de non-assistance à la propulsion, ou associé à des commandes propres à l'engin tracteur comme la commande de freinage.
